Europäisches Patentamt

European Patent Office

Office européen des brevets

(11) Numéro de publication: **0 055 176**
**B1**

(12) **FASCICULE DE BREVET EUROPEEN**

(45) Date de publication du fascicule du brevet: 04.12.85

(51) Int. Cl.⁴: **F 02 C 7/266**

(21) Numéro de dépôt: **81402015.2**

(22) Date de dépôt: **17.12.81**

(54) Dispositif d'allumage et de réallumage pour turbine à gaz.

(30) Priorité: **24.12.80 FR 8027475**

(43) Date de publication de la demande:
**30.06.82 Bulletin 82/26**

(45) Mention de la délivrance du brevet:
**04.12.85 Bulletin 85/49**

(84) Etats contractants désignés:
**DE FR GB IT SE**

(56) Documents cités:
**FR-A-1 364 159**
**FR-A-2 059 378**
**FR-A-2 177 893**
**FR-A-2 189 633**
**FR-A-2 296 765**
**US-A-3 504 490**
**US-A-3 869 645**

(73) Titulaire: **P.S.A. Etudes & Recherches**
**75, Avenue de la Grande-Armée**
**F-75761 Paris Cedex 16 (FR)**

(72) Inventeur: **Menard, Christian**
**10, rue du Leon**
**F-78310 Maurepas (FR)**
Inventeur: **Marouby, Daniel**
**9, rue Joseph Bertrand**
**F-78220 Viroflay (FR)**
Inventeur: **Chollet, Alain**
**109, rue Hasco**
**F-75020 Paris (FR)**

(74) Mandataire: **Fabien, Henri**
**PEUGEOT SA. DAT / BPI 18, rue des Fauvelles**
**F-92250 La Garenne-Colombes (FR)**

**EP 0 055 176 B1**

Courier Press, Leamington Spa, England.

## Description

L'invention à pour objet un dispositif d'allumage par étincelle du carburant dans la chambre de combustion d'une turbine à gaz ou d'une turbine de turbo-compresseur du genre comportant des moyens électroniques de contrôle du cycle de charge et de décharge d'un générateur d'étincelles du type capacitif en fonction d'un ou plusieurs paramètres de l'état de fonctionnement de la turbine, les moyens de contrôle du cycle de charge et de décharge de la cellule capacitive du générateur d'étincelles déterminant la fréquence de décharge de la cellule capacitive.

L'invention a également pour objet un dispositif de détection de l'extinction de la flamme dans la chambre de combustion et de réallumage de la combustion.

Le document FR—A—1364 159 montre un dispositif d'allumage du genre ci-dessus dans lequel seule la fréquence d'étincelles peut être contrôlée et uniquement comme fonction croissante de la vitesse de la turbine. On ne peut avec ce dispositif obtenir une optimisation de la puissance d'allumage et notamment dans le cas de réallumage.

Le document FR—A—2059 378 montre un dispositif d'allumage pour turbine à gaz comportant deux condensateurs et dans lequel deux modes de fonctionnement sont possibles, l'un en haute énergie et basse fréquence obtenu par couplage des deux condensateurs, l'autre à basse énergie et haute fréquence en utilisant un seul des deux condensateurs. Un tel dispositif ne permet pas d'optimiser en toute circonstance la puissance et la fréquence d'étincelles.

Dans les turbines à gaz on utilise un dispositif d'allumage par étincelle, comme dans les moteurs à allumage commandé, pour enflammer un mélange air-carburant dans la chambre de combustion. Le fonctionnement du dispositif d'allumage n'est nécessaire que pendant la mise en route de la turbine et pour se garantir contre l'extinction. Cette dernière peut résulter, entre autres, d'une interruption de l'alimentation en carburant ou du soufflage de la flamme par la turbulence dans la chambre de combustion.

Dans un tel dispositif une décharge électrique d'une quantité d'énergie et d'une durée prédéterminées doit se produire entre les électrodes d'une bougie d'allumage à une fréquence spécifiée afin de permettre la combustion du mélange. Par conséquent l'une des raisons les plus fréquentes pour lesquelles la combustion ne se produit pas ou s'arrête est l'insuffisance énergétique de la décharge.

D'autre part le dispositif d'allumage fonctionne dans des conditions particulièrement difficiles. La source d'alimentation, souvent appelée excitateur, doit fournir des impulsions à très haute tension d'énergie très élevée et à très fort taux de répétition. Le dispositif doit en outre fonctionner dans une plage de pression qui va de 3,5 bars jusqu'à plus de 140 bars avec des écarts de température de surface avoisinant 1000°C. Souvent les électrodes se couvrent de carburant liquide dans les conditions du démarrage à froid. La durée de vie du dispositif, et notamment des bougies, est de ce fait limitée. Pour augmenter cette durée il est connu d'utiliser un dispositif pour détecter la vitesse de l'arbre de la turbine et déconnecter automatiquement la source d'énergie de l'allumage en réponse à la vitesse de l'arbre moteur.

Mais dans les turbines à gaz, outre la période de démarrage, il se présente d'autres cas où la fonction allumage est nécessaire. En effet les turbines à gaz fonctionnent avec un important excès d'air qui s'écoule, à grande vitesse, sur les injecteurs et la flamme risque toujours d'être soufflée, et donc la combustion arrêtée, à la suite de variations des conditions de fonctionnement, telle que variation de la vitesse de l'air, de la température et/ou de la pression et/ou du débit de carburant. C'est pourquoi il est courant d'équiper un tel système d'un dispositif destiné à détecter automatiquement une extinction de la flamme en prenant pour paramètre la vitesse de la turbine et quand celle-ci tombe au-dessous d'un niveau prédéterminé on suppose qu'il s'est produit une extinction et le dispositif d'allumage est alors remis en action.

Le document FR—A—2189 633 montre un dispositif de réallumage qui utilise le taux de variation de la vitesse de la turbine. De tels dispositifs de détection prenant des critères indirects résultant de l'extinction ne sont pas satisfaisants.

Un premier but de l'invention est de perfectionner un dispositif d'allumage pour turbine à gaz de type capacitif pour qu'il soit apte à fournir, en toutes circonstances, l'énergie optimale permettant le démarrage de la combustion et le maintien de celle-ci tout en augmentant considérablement la durée de vie des composants du dispositif et notamment des bougies.

A cet effet un dispositif selon l'invention se caractérise en ce que les moyens de contrôle du cycle de charge et de décharge de la cellule capacitive du générateur d'étincelles comportent un générateur de fonction délivrant une tension VR1 fonction de la vitesse de l'arbre moteur de la turbine et éventuellement d'autres paramètres, cette tension servant de référence pour l'élaboration d'une part d'une tension de consigne VR6 déterminant la tension maximale VR2 de charge de la cellule capacitive et d'autre part d'une tension VR7 déterminant la fréquence des impulsions de commande d'un dispositif de décharge de la cellule capacitive.

Les valeurs de la tension et de la fréquence sont, de préférence, maximales pour une vitesse nulle de l'arbre de la turbine ou lors de l'extinction de la flamme dans la chambre de combustion.

Un dispositif selon l'invention se caractérise en outre en ce que le contrôle d'un convertisseur de charge, comprenant un oscillateur haute tension assurant la charge d'une cellule capacitive, s'effectue en boucle fermée par comparaison d'une tension de consigne élaborée à partir d'une tension de référence, délivrée par un générateur de fonction et représentative de la vitesse de la turbine et éventuellement d'autres paramètres, et de la tension de charge de la cellule capacitive.

Un autre but de l'invention est d'assurer en cas d'extinction le réallumage de la turbine, de façon fiable et efficace. On y parvient grâce à des moyens de détection de la flamme du type optoélectroniques comportant un détecteur optique, une fibre optique transmettant la lumière détectée à un interface délivrant, en fonction du signal lumineux reçu, un signal électrique commandant en cas d'extinction l'énergie maximale du dispositif d'allumage. Le dispositif de réallumage élabore dans un étage d'adaptation une tension de référence qui est superposée aux tensions de consigne, représentatives de la tension de référence délivrée par le générateur de fonction, lesdites tensions de consigne pilotant respectivement le dispositif de contrôle de la charge et le dispositif de commande de décharge de la cellule capacitive.

D'autres caractéristiques de l'invention apparaîtront à la lecture de la description qui suit en référence aux dessins annexés qui montrent:

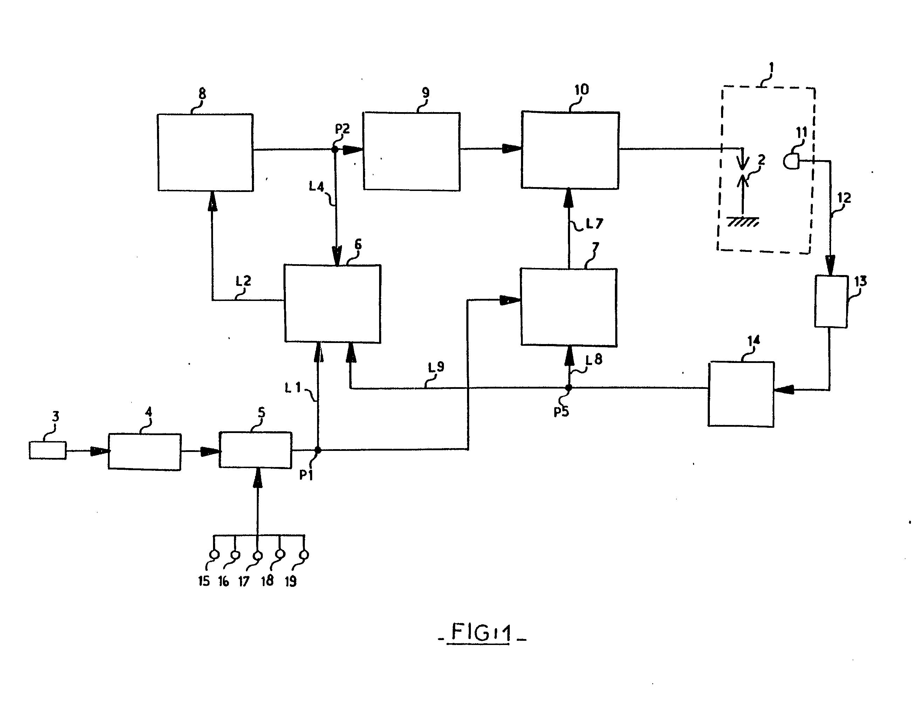

en Fig. 1 un schéma général d'un dispositif d'allumage conforme à l'invention;

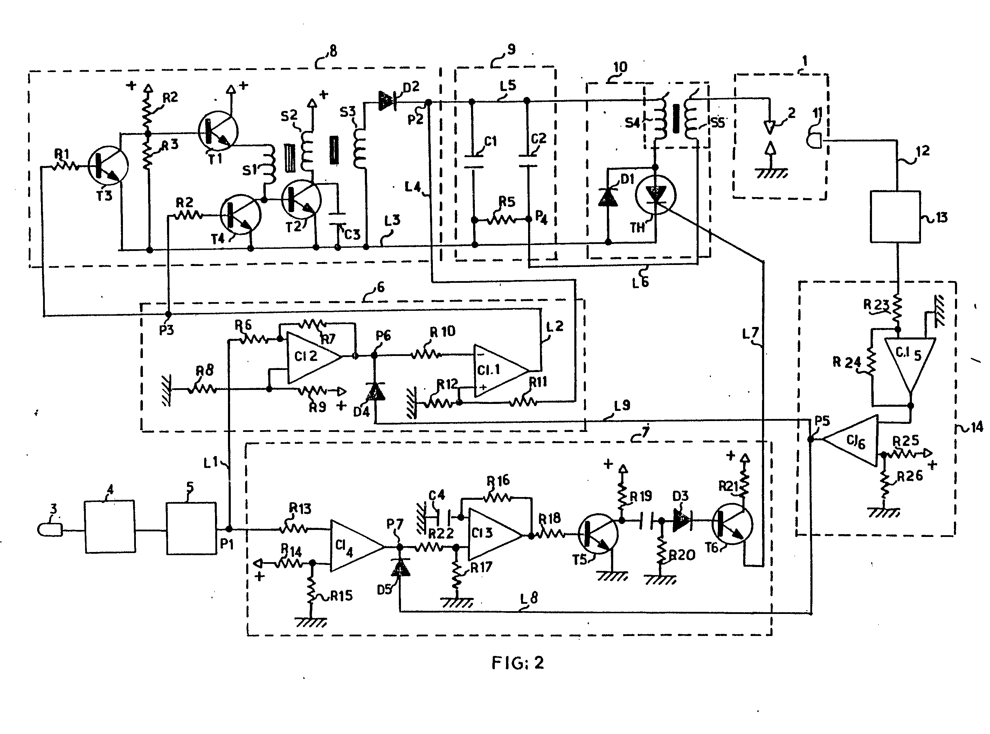

— en Fig. 2 un exemple non limitatif de réalisation d'un tel dispositif;

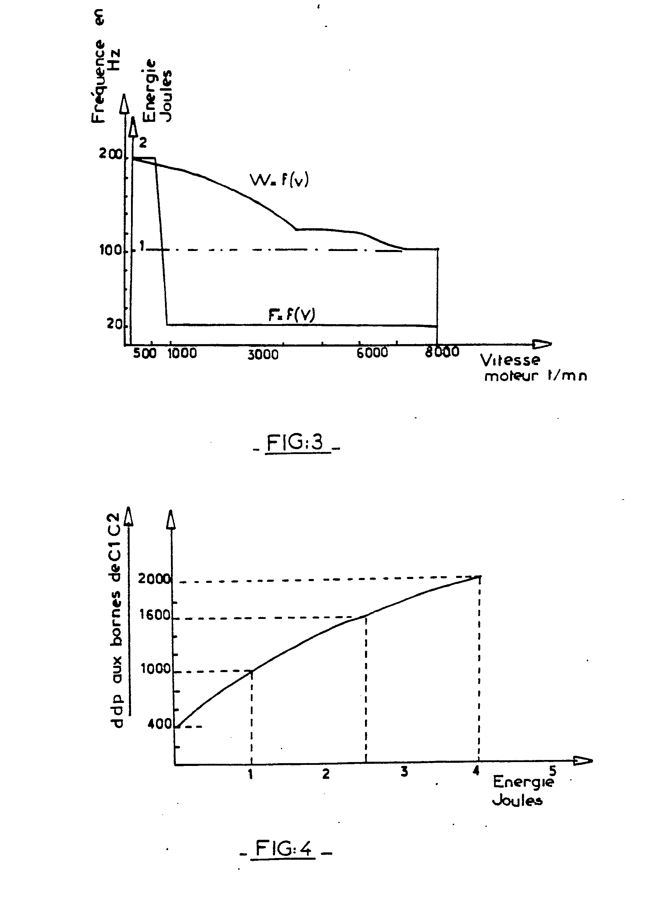

— en Fig. 3 un exemple de lois de variation de l'énergie et de la fréquence d'étincelle;

— en Fig. 4 la relation entre l'énergie de décharge et la différence de potentiel aux bornes de la cellule capacitive.

Les blocs fonctionnels 6 à 10 et 14 de la Fig. 1 sont détaillés sur la Fig. 2 et entourés chacun d'un trait discontinu. Pour plus de clarté sont reportées en Fig. 1 les références des lignes conductrices de liaison L1 à L9 et les points d'interconnexion P1 à P7 de la Fig. 2 ayant une correspondance fonctionnelle.

Pour la commodité de l'exposé on appelera VR1 à VR3 et VR5 à VR7 les tensions respectives aux points d'interconnexion P1 à P3 et P5 à P7.

Le dispositif d'allumage comporte (Fig. 1):

— dans la chambre de combustion 1 de la turbine (non représentée) une bougie d'allumage 2;

— un capteur 3 délivrant un signal dont la fréquence est proportionnelle à la vitesse de l'arbre moteur de la turbine; et un circuit 4 de calcul de la vitesse de la turbine délivrant une tension proportionnelle à cette vitesse;

— un générateur de fonction 5 élaborant, en fonction de la vitesse et éventuellement d'autres paramètres de l'état de fonctionnement de la turbine ou du turbo-compresseur, une loi de modulation sous forme d'une tension VR1 qu'il délivre à sa sortie en P1. Ces autres paramètres sont fournis par des capteurs 15 à 19 qui peuvent par exemple indiquer le débit de carburant, la température du carburant, la température de l'air, la température du circuit de refroidissement et la pression délivrée par le turbo-compresseur. L'électronique composant le générateur de fonction 5 peut être réalisée en technique numérique ou analogique;

— un dispositif de détection et de réallumage automatique en cas d'extinction de la flamme constitué d'un détecteur optique de flamme 11, placé dans la chambre de combustion, d'une fibre optique 12 reliant le détecteur 11 à un interface opto-électronique 13 délivrant un signal électrique, fonction du signal optique, à un circuit de réallumage 14 qui délivre une tension VR5 à sa sortie en P5;

— un dispositif de contrôle 6 d'un convertisseur de charge 8;

— un dispositif de commande 7, d'un système de décharge 10;

— une cellule capacitive 9 comportant au moins un condensateur.

Le principe de fonctionnement du dispositif d'allumage est le suivant. La cellule capacitive 9 est chargée à une tension VR2 par le convertisseur de charge 8 qui est piloté en boucle fermée par le contrôleur de charge 6 qui compare la tension VR2 à une tension de consigne élaborée en fonction de la tension de sortie VR1 du générateur de fonction 5 prise en P1 ou de la tension de sortie VR5 du circuit de réallumage du dispositif de réallumage 14. Le dispositif de commande 7 fournit des impulsions de commande à un thysistor du système de décharge 10 à une fréquence qu'il détermine en fonction des tensions VR1 ou VR5.

Les figures 3 et 4 représentent un exemple de lois de variation de la tension de charge, et donc de l'énergie d'étincelle, et de la fréquence de décharge en fonction de la vitesse de la turbine, pouvant être obtenues par un dispositif selon l'invention. La tension de charge et la fréquence de décharge ont été choisies maximales pour les conditions de démarrage de la turbine. Il est avantageux de prévoir, pour assurer les meilleures conditions de réallumage, que la tension de commande VR5 du réallumage détermine également le niveau maximal de la tension de charge et de la fréquence de décharge.

Au lieu de piloter le dispositif de contrôle de la charge 6 et le dispositif de commande 7 de la décharge par les tensions VR1 ou VR5, il serait possible d'introduire la tension VR5 dans le générateur de fonction 5 comme un des paramètres d'élaboration de la tension VR1. Pour la sécurité de réallumage il est cependant préférable d'opérer comme dans l'exemple décrit.

Les éléments 6 à 10 et 14 vont maintenant être décrits plus en détail en référence à la figure 2. Les alimentations à la source commune de tension positive, les liaisons à la masse ou les divers éléments tels que résistances d'adaptation ou de polarisation, ayant un rôle habituel et évident, ne seront pas décrits.

Dispositif de contrôle 6 de la charge

Il se compose essentiellement d'un comparateur C.I.1 et d'un amplificateur opérationnel C.I.2. Une première entrée du comparateur C.I.1 est reliée, d'une part à la sortie de l'amplificateur opérationnel C.I.2 et d'autre part à la sortie P5 du circuit de réallumage 14 par la ligne L9 via une diode D4. La deuxième entrée du comparateur

C.I.1 est reliée à la cellule capacitive 9 ou point P2 de la ligne L5 par la ligne L4. La sortie du comparateur C.I.1 est reliée à l'entrée P3 du convertisseur de charge 8 par la ligne L2. Enfin l'entrée de l'amplificateur opérationnel C.I.2 est reliée à la sortie P1 du générateur de fonction 5 par la ligne L1.

## Dispositif de commande de décharge 7

Il se compose essentiellement d'un oscillateur ou d'un circuit de relaxation C.I.3, d'un comparateur C.I.4 et d'un circuit de commande comprenant deux transistors T5 et T6. La fréquence de l'oscillateur C.I.3 est réglée par la tension appliquée à son entrée P7, l'entrée P7 de l'oscillateur C.I.3 est reliée d'une part à la sortie du comparateur C.I.4 et d'autre part par la diode D5 et la ligne L8, à la sortie 5 du circuit de réallumage 14. Une entrée de comparateur C.I.4 est reliée à la sortie P1 du générateur de fonction 5. Les impulsions de commande du dispositif de décharge 10 sont délivrées par le transistor T6 commandé par T5, lui-même piloté par la fréquence de l'oscillateur C.I.3.

## Convertisseur de charge 8

Il se compose essentiellement d'un oscillateur haute tension constitué des transistors T1 et T2 et des enroulements S1 et S2. L'enroulement S1 est monté en contre-réaction dans la base du transistor T2. L'oscillateur est commandé par les transistors T3 et T4 dont les bases reçoivent par l'entrée P3 la tension VR3 délivrée par le dispositif de contrôle 6. Le collecteur du transistor T3 est relié à la base du transistor T1 et le collecteur du transistor T4 à la base du transistor T2. Les émetteurs des transistors T2, T3 et T4 sont reliés à la ligne L3, référence négative commune au convertisseur de charge 8, à la cellule capacitive 9 et au système de décharge 10. L'enroulement S2 forme avec l'enroulement S3 un transformateur élévateur de tension. La tension est redressée par la diode D2 disposée à la sortie de l'enroulement S3 vers la cellule capacitive 9. Le courant ainsi obtenu charge la cellule capacitive 9.

## Cellule capacitive 9

Elle se compose de deux condensateurs C1 et C2 montés en parallèle entre la ligne L5 liée à la cathode de la diode D2 et la ligne L3. Une résistance R5 est interposée entre la sortie P4 du condensateur C2 et la ligne L3.

## Dispositif de décharge 10

Il comporte essentiellement un thyristor TH dont la gachette reçoit par la ligne L7 les impulsions de commande du dispositif de commande 7 et un transformateur composé des enroulements S4 et S5. Le primaire S4 relié à la ligne L5 est monté en série sur l'anode de TH dont la cathode est reliée à L3. Une diode de protection D1 est placée entre la cathode et l'anode du thyristor TH. Enfin le secondaire S5 est disposé entre la bougie 2 et le point P4 auquel il est relié par la ligne L6.

## Circuit 14 du dispositif de réallumage

Il est composé d'un circuit d'adaptation d'impédance C.I.5 et d'un comparateur calibreur C.I.6 L'entrée du circuit C.I.5 est reliée à la sortie de l'interface opto-électronique 13 et sa sortie à une entrée du comparateur C.I.6 qui délivre à sa sortie P5 la tension de commande calibrée VR5 du réallumage.

## Fonctionnement du dispositif

L'amplificateur opérationnel C.I.2 détermine en fonction de la tension VR1 qui lui est fournie par le générateur de fonction 5 une tension de consigne VR6. Le comparateur C.I.1 compare la tension VR2 des condensateurs C1 et C2 à la tension de consigne VR6 et agit sur les bases des transistors T3 et T4 de telle manière que l'oscillateur du dispositif de contrôle 6 de la charge se bloque pour des valeurs de comparaison déterminées. Le rapport de transformation des enroulements S2, S3 détermine une pointe de tension qui peut être supérieure à 1000 volts. La charge en courant et tension continus des condensateurs C1 et C2 est réalisée, pendant que le thyristor TH est bloqué.

Lorsque le transistor T1 est bloqué par le transistor T3 le défaut provoqué par les inductions des enroulements S1 et S2 sur lesquels existent des capacités parasites détermine une faible oscillation qui empêcherait le blocage de l'oscillateur si on ne coupait pas en même temps, grâce au transistor T4, la liaison par le transistor T2 à la ligne L3.

Lorsque les condensateurs C1 et C2 sont chargés à la tension VR2 déterminée par la loi de modulation le convertisseur de charge est donc bloqué. On assure ainsi le contrôle en boucle fermée de la charge de la cellule capacitive 9. Lorsque le thyristor TH reçoit une impulsion du dispositif de commande 7, le condensateur C1 se décharge à travers l'enroulement S4 ce qui induit dans l'enroulement S5 une tension suffisante à l'amorce de la décharge entre les électrodes de la bougie 2. Le condensateur C1 est déterminé et dimensionné pour assurer l'accumulation de l'énergie nécessaire à la formation de crête d'étincelle, c'est-à-dire l'ionisation d'allumage, à travers le transformateur S4, S5. Le condensateur C2 assure la poste-décharge c'est-à-dire qu'il fournit l'énergie et la durée d'étincelle nécessaires pour obtenir l'allumage, ceci lorsque l'ionisation a été suffisante pour assurer le passage du courant de décharge entre les électrodes de la bougie. Le condensateur C1 se décharge presque instantanément alors que la décharge de C2 est plus lente grâce à la résistance R5 insérée dans son circuit de décharge ce qui en outre protège le thyristor TH.

Le comparateur C.I.4 délivre, en fonction de la tension VR1, une tension VR7 qui détermine la fréquence de l'oscillateur C.I.3. Les impulsions de commande de la gâchette du thyristor TH sont délivrées par le transistor T6 piloté par le transistor T5 à la fréquence de l'oscillateur C.I.3.

Le comparateur C.I.4 compare la tension VR1 à une tension constante déterminée par le choix des résistances R14 et R15. Lorsque la tension VR1 est supérieure à cette tension constante la tension VR7 prend une valeur déterminant une première fréquence de l'oscillateur C.I.3. Lorsque la tension VR1 est inférieure à cette tension constante la tension VR7 prend une valeur déterminant une deuxième fréquence de l'oscillateur. Ainsi dans l'exemple de loi de fréquence de décharge représenté en figure 3, la première fréquence est de 200 Hz et la deuxième fréquence de 20 Hz, le passage de l'une à l'autre se faisant lorsque la tension VR1 passe par la valeur correspondant à une vitesse de la turbine voisine de 1000 t/mn.

Après chaque décharge, la tension VR2 retombe à O. La tension de commande VR3 délivrée par le comparateur C.I.1 devient nulle, ce qui bloque les transistors T3 et T4, un nouveau cycle de charge commence.

Lorsque la flamme s'éteint dans la chambre de combustion, le rayonnement lumineux qui était dirigé au moyen de la fibre optique 12 sur l'interface opto-électronique 13 s'interrompt, ce dernier délivre un signal O. Le circuit d'adaptation C.I.5 délivre alors à sa sortie une tension VR5.

La tension VR5 se superpose en P6 et P7 aux tensions VR6 et VR7 appliquées aux entrées du comparateur C.I.1 et de l'oscillateur C.I.3, respectivement par l'intermédiaire des diodes D4 et D5. De préférence la tension VR5 est égale aux tensions VR6 et VR7 délivrées respectivement par les comparateurs C.I.2 et C.I.4 lorsque la tension VR1 fournie par le générateur de fonction 5 est significative des conditions de démarrage. On obtient donc ainsi pour le réallumage les mêmes niveaux d'énergie et de fréquence d'étincelles que pour le démarrage.

Les différents éléments C.I.1 à C.I.6 ainsi que les transistors T1 à T6 peuvent bien entendu être réalisés sous forme d'un ou plusieurs circuits intégrés.

**Revendications**

1. Dispositif d'allumage par étincelle du carburant dans une chambre de combustion d'une turbine à gaz, comportant des moyens électroniques (3 à 7, 13 à 14) de contrôle du cycle de charge et de décharge d'un générateur d'étincelles du type capacitif (8—9—10) en fonction d'un ou plusieurs paramètres de l'état de fonctionnement de la turbine, les moyens de contrôle du cycle de charge et de décharge de la cellule capacitive du générateur d'étincelles déterminant la fréquence de décharge de la cellule capacitive, caractérisé en ce que les moyens de contrôle du cycle de charge et de décharge de la cellule capacitive (9) du générateur d'étincelles comportent un générateur de fonction (5) délivrant une tension VR1 fonction de la vitesse de l'arbre moteur de la turbine et éventuellement d'autres paramètres, cette tension servant de référence pour l'élaboration d'une part d'une tension de consigne VR6 déterminant la tension maximale VR2 de charge de la cellule capacitive et d'autre part d'une tension VR7 déterminant la fréquence des impulsions de commande d'un dispositif de décharge (10) de la cellule capacitive (9).

2. Dispositif selon la revendication 1 caractérisé en ce que la tension de charge VR2 et la fréquence de décharge sont maximales pour les valeurs de la tension de référence VR1 correspondant à une vitesse nulle de l'arbre de la turbine ou à l'extinction de la flamme dans la chambre de combustion.

3. Dispositif selon la revendication 1 caractérisé en ce qu'il comporte des moyens de détection (11, 12) de l'extinction de la flamme pilotant un dispositif de réallumage (13, 14) élaborant en cas d'extinction une tension VR5 qui est superposée aux tensions VR6 et VR7 pilotant respectivement un dispositif de contrôle de la charge (6) et un dispositif de commande (7) de décharge de la cellule capacitive.

4. Dispositif selon la revendication 3 caractérisé en ce que les moyens de détection de la flamme comportent une fibre optique (12) transmettant, de façon en soi connue, la lumière de la flamme à un interface (13) délivrant en fonction du signal lumineux un signal électrique servant à l'élaboration dans un circuit de réallumage (14) de la tension VR5 se superposant aux tensions de consigne VR6 et VR7.

5. Dispositif selon l'une quelconque des revendications 1 à 4 caractérisé en ce que le contrôle du convertisseur de charge (8) assurant la charge de la cellule capacitive (9) s'effectue en boucle fermée par comparaison des tensions VR2 et VR6 dans un comparateur C.I.1 du dispositif de contrôle (6) de la charge.

6. Dispositif selon la revendication 5 caractérisé en ce que le convertisseur de charge (8) comporte un oscillateur composé de transistors T1 et T2 et d'enroulements S1 et S2, l'enroulement S1 étant monté en contreréaction dans la base du transistor T1 et en ce que ledit oscillateur est piloté par un transistor T3 commandé par la tension de sortie du comparateur C.I.1 de telle manière que le transistor T1 se bloque pour des valeurs de comparaison déterminées.

7. Dispositif selon la revendication 6 caractérisé en ce que le convertisseur (8) est muni en outre d'un transistor T4 commandé par la tension de sortie du comparateur C.I.1 et dont le montage permet d'éliminer les inductions parasites engendrées par les enroulements S1, S2 de l'oscillateur.

8. Dispositif selon l'une quelconque des revendications précédentes caractérisé en ce que le dispositif de décharge (10) comporte un thyristor TH piloté par le dispositif de commande (7) à travers lequel s'effectue la décharge du ou des condensateurs de la cellule capacitive (9).

9. Dispositif selon la revendication 8 caractérisé en ce que la cellule capacitive comporte deux condensateurs C1 et C2 dont la décharge est commandée par le thyristor TH, le premier condensateur C1 assurant directement à travers un transformateur S4, S5 l'amorçage de l'arc entre les électrodes de la bougie (2) et le deuxième condensateur assurant le niveau d'énergie et la durée d'étincelle nécessaires à l'allumage à travers une résistance R5 insérée dans son circuit de décharge.

## Patentansprüche

1. Einrichtung zum Zünden von Brennstoff in einer Verbrennungskammer einer Gasturbine mittels Funken mit elektronischen Vorrichtungen (3—7, 13, 14) zum Steuern des Lade- und Entladezyklus eines kapazitiven Funkengenerators (8, 9, 10) in Abhängigkeit von einem oder mehrerer Betriebsparameter der Turbine, wobei diese Vorrichtungen die Entladefrequenz der kapazitiven Zelle des Funkengenerators bestimmen, dadurch gekennzeichnet, daß die Vorrichtungen zum Steuern des Lade- und Entladezyklus der kapazitiven Zelle (9) des Funkengenerators einen Funktionsgeber (5) aufweisen, der eine von der Drehzahl der Turbinenwelle und gegebenenfalls von anderen Parametern abhängige Spannung VR 1 abgibt, wobei diese Spannung als Bezugsgröße zur Erzeugung einerseits eine Sollspannung VR 6, die die maximale Ladespannung der kapazitiven Zelle bestimmt und andererseits einer die Frequenz der Steuerimpulse einer Entladevorrichtung (10) der kapazitiven Zelle (9) bestimmenden Spannung dient.

2. Einrichtung nach Anspruch 1, dadurch gekenneichnet, daß die Ladespannung VR 2 und die Entladefrequenz für die Werte der Bezugsspannung VR 1 maximal sind, die der Geschwindigkeit Null der Turbinenwelle oder dem Erlöschen der Flamme in der Verbrennungskammer entsprechen.

3. Einrichtung nach Anspruch 1, gekennzeichnet durch Vorrichtungen (11, 12) zum Erfassen des Erlöschens der eine Wieder-Zündanlage (13, 14) steuernde Flamme, wobei die Wieder-Zündanlage beim Erlöschen eine Spannung VR 5 erzeugt, die den Spannungen VR 6 und VR 7 überlagert ist, die jeweils eine Überwachungsvorrichtung (6) der Ladung bzw. eine Steuervorrichtung (7) der Entladung der kapazitiven Zelle steuern.

4. Einrichtung nach Anspruch 3, dadurch gekennzeichnet, daß die Vorrichtungen zum Erfassen der Flamme einen optischen Faserlichtleiter (12) aufweisen, der das Licht der Flamme auf an sich bekannter Weise an ein Interface (13) liefert, das in Abhängigkeit vom Lichtsignal ein elektrisches Signal liefert, das zur Erzeugung der Spannung VR 5 in der Wieder-Zündschaltung (14) dient, die den Sollspannungen VR 6 und VR 7 überlagert wird.

5. Einrichtung nach einem der Ansprüche 1 bis 4, dadurch gekennzeichnet, daß die Regelung des Ladungsumwandlers (8), der die Ladung der kapazitiven Zelle (9) liefert, in einem geschlossenen Regelkreis mittels Vergleich der Spannungen VR 2 und VR 6 in einem Vergleicher C.I.1 der Steuervorrichtung (6) für die Ladung erfolgt.

6. Einrichtung nach Anspruch 5, dadurch gekennzeichnet, daß der Ladungsumwandler (8) einen Oszillator aufweist, der aus Transistoren T1 und T2 und Wicklungen S1 und S2 besteht, wobei die Wicklung S1 in Gegenschaltung zur Basis des Transistors T1 geschaltet ist und dadurch, daß der Oszillator über einen Transistor T3 gesteuert wird, der wiederum von der Ausgangsspannung des Vergleichers C.I.1 derart gesteuert wird, daß der Transistor T1 für bestimmte Vergleichswerte sperrt.

7. Einrichtung nach Anspruch 6, dadurch gekennzeichnet, daß der Umwandler (8) außerdem einen von der Ausgangsspannung des Vergleichers C.I.1 gesteuerten Transistor T4 aufweist, dessen Anordnung es ermöglicht, parasitäre Induktionen zu eliminieren, die durch die Wicklungen S1, S2 des Oszillators erzeugt werden.

8. Einrichtung nach einem der vorstehenden Ansprüche, dadurch gekennzeichnet, daß die Entladevorrichtung (10) einen Thyristor TH aufweist, der von der Steuervorrichtung (7) gesteuert wird, über der die Entladung des Kondensators oder der Kondensatoren der kapazitiven Zelle (9) erfolgt.

9. Einrichtung nach Anspruch 8, dadurch gekennzeichnet, daß die kapazitive Zelle zwei Kondensatoren C1 und C2 aufweist, deren Entladung von dem Thyristor TH gesteuert wird, wobei der erste Kondensator die Zündung des Lichtbogens zwischen den Elektroden der Kerze (2) über einen Transformator S4, S5 sicherstellt und der zweite Kondensator das Energieniveau und die zum Entflammen notwendige Zünddauer über einen in dessen Entladekreis eingefügten Widerstand R5 bestimmt.

## Claims

1. A device for spark ignition of the fuel within a combustion chamber of a gas turbine, comprising electronic means (3 to 7, 13 to 14) for controlling the charge and discharge cycle of a spark generator (8—9—10) of the capacitive type as a function of one or more parameters of the operating condition of the turbine, the means for controlling the charge and discharge cycle of the capacitive cell of the spark generator determining the discharge frequency of the capacitive cell, characterised in that the means for controlling the charge and discharge cycle of the capacitive cell (9) of the spark generator comprise a function generator (5) supplying a voltage VR1 as a function of the speed of the turbine drive shaft and when appropriate of other parameters, this voltage serving the purpose of a reference for generating, on the one hand, a nominal voltage VR6 determining the maximum voltage VR2 for charging the capacitive cell, and on the other hand, a voltage VR7 determining the frequency of the control pulses of a device (10) for discharging the capacitive cell (9).

2. Device according to claim 1, characterised in that the charge voltage VR2 and the discharge frequency are a maximum for the values of the reference voltage VR1 corresponding to a zero speed of the turbine shaft or upon extinction of the flame in the combustion chamber.

3. Device according to claim 1, characterised in that it comprises means (11, 12) for detecting flame extinction, controlling a re-ignition device (13, 14) which in case of extinction generates a voltage VR5 which is superimposed on the voltages VR6 and VR7 which, respectively, control a charge monitor device (6) and a device (7) for operating the discharge of the capacitive cell.

4. Device according to claim 3, characterised in that the flame extinction detecting means comprise an optical fibre (12) which in a manner known per se transmits the light of the flame to an interface (13) which as a function of the light signal delivers an electrical signal serving the purpose of generating the voltage VR5 in a re-ignition circuit (14), which is superimposed on the nominal voltages VR6 and VR7.

5. Device according to any one of the claims 1 to 4, characterised in that the control of the charge converter (8) providing the charge of the capacitive cell (9) is provided by a closed loop by comparing the voltages VR2 and VR6 in a comparator C.I.1. of a or the charge monitor device (6).

6. Device according to claim 5, characterised in that the charge converter (8) comprises an oscillator incorporating transistors T1 and T2 and windings S1 and S2, the winding S1 being placed in regenerative connection in the base of the transistor T1, and in that the said oscillator is driven by a transistor T3 controlled by the output voltage of the comparator C.I.1, in such manner that the transistor T1 is blocked for particular comparison values.

7. Device according to claim 6, characterised in that the converter (8) is also provided with a transistor T4 driven by the output voltage of the comparator C.I.1 and whereof the installation allows elimination of the interference inductions engendered by the windings S1, S2 of the oscillator.

8. Device according to any one of the preceding claims, characterised in that the discharge device (1) comprises a thyristor TH controlled by the control device (7) through which occurs the discharge of the capacitor or capacitors of the capacitive cell (9).

9. Device according to claim 8, characterised in that the capacitive cell comprises two capacitors C1 and C2 whereof the discharge is controlled by the thyristor TH, the first capacitor C1 directly assuring the striking of the arc between the electrodes of the spark plug (2) via a transformer S4, S5, and the second capacitor providing the energy level and the spark duration needed for ignition through a resistor R5 inserted into its discharge circuit.

_FIG.1_

0 055 176

FIG. 2

0 055 176

_ FIG:3 _

_ FIG:4 _